# EUROPEAN PATENT APPLICATION

(11) **EP 1 773 065 A2**
(43) Date of publication of application: **11.04.2007**
(21) Application number: 06254587.6
(22) Date of filing: 04.09.2006
(51) Int. Cl.: H04N 7/26, H04N 7/50, H04N 7/46

(54) **Signal encoding apparatus and method using 2-pass variable bit rate encoding**

(30) Priority: 08.09.2005 JP 2005260007
(71) Applicant: SONY CORPORATION, Tokyo (JP)
(72) Inventor: Koizumi, Tadahito Sony Corporation, Tokyo 141 (JP); Ohta, Masashi Sony Corporation, Tokyo 141 (JP); Tomita, Masami Sony Corporation, Tokyo 141 (JP); Naganuma, Hiromasa Sony Corporation, Tokyo 141 (JP); Ikeda, Kiyoshi Sony Corporation, Tokyo 141 (JP); Karimoto, Takashi Sony Corporation, Tokyo 141 (JP)
(74) Representative: Jackson, Jonathan Andrew

(57) **Abstract**

The disclosure provides an apparatus für encoding signals by using a 2-pass variable bit rate system. The apparatus includes a stream analyzing section that analyzes the input moving picture signals to create information required to calculate the degree of difficulty of encoding per unit time, an encoding degree-of-difficulty calculating section that calculates the degree of difficulty of encoding per unit time on the basis of the information created by the stream analyzing section, a recording section that records the input moving picture signals and the information on the calculated degree of difficulty of encoding per unit time such that they correspond to each other, and a decoding section that inputs the moving picture signals recorded on the recording section to decode the signals, and a bit rate calculating section that calculates a bit rate to be allocated to encoding at a second pass on the basis of the information on the degree of difficulty of encoding per unit time recorded on the recording section, and an encoding section that performs encoding at a second pass on the signals decoded by the decoding section according to the bit rate calculated by the bit rate calculating section.

## Description

The present invention relates to a signal encoding apparatus and method.

An MPEG-2 encoding system is generally classified into CBR (Constant Bit Rate) and VBR (Variable Bit Rate). The CBR is called a fixed bit rate system that performs encoding at a constant transmission rate irrespective of the contents of a picture, and the VBR is called a variable bit rate system that allocates more number of bits to a high-definition picture or a picture having a large change, and on the contrary, less number of bits are allocated to a picture having a small change so that a limited number of bits can be used efficiently and picture quality can be kept constant. In such VBR, the complexity of a picture per unit time, for example, per frame is quantized as the degree of difficulty of encoding of the frame, and the allocation of the bit rate (bit amount) of the frame is optimized according to the degree of difficulty of encoding.

As the VBR, there are a 2-pass VBR in which the degree of difficulty of encoding per frame is obtained and recorded by analyzing the complexity of a picture in encoding processing at a first pass, and a bit rate to be allocated to each frame is adjusted on the basis of the information on the degree of difficulty of encoding in encoding processing at a second pass, and a 1-pass VBR in which the analysis of the complexity of a picture, the calculation of the degree of difficulty of encoding, and the adjustment of a bit rate are performed in 1-pass encoding processing.

Since the 2-pass VBR can analyze the whole stream at the first pass to obtain the degree of difficulty of encoding per frame, allocation of an optimal bit rate can be performed in the limited capacity of a disc, and a bit rate to be allocated to each frame can be adjusted so as to be a set average bit rate. Therefore, it is common that the 2-pass VBR is used for MPEG-2 encoding when video and audio digital stream signals are recorded on a recording medium whose capacity is limited severely, such as DVDs (for instance, JP-A-2005-064790, etc.)

In the 2-pass VBR, at a first pass, input digital stream signals are recorded directly on a recording section, and encoding is performed following decoding by exclusive decoder and encoder provided to create the information required to calculate the degree of difficulty of encoding. The degree of difficulty of encoding per frame is calculated on the basis of the information created at the time of the encoding by the encoder, and is recorded so as to correspond to each frame of the recorded digital stream signals. In encoding processing at a second pass, the degree of difficulty of encoding recorded is read in along with the digital stream signals, and then an optimal bit rate to be allocated to a corresponding frame is calculated from the degree of difficulty of encoding. Then, when the video signals and audio signals decoded by the decoder for recording pass are encoded, the encoding is performed according to the calculated bit rate.

However, in such a configuration of related art, exclusive decoder and encoder that create the information required to calculate the degree of difficulty of encoding are needed separately from the decoder and encoder for recording pass. Therefore, there is a problem in that the scale of a whole system becomes large and consequently the cost rises. Further, there is also a possibility that the performance of the decoder and encoder becomes a bottleneck, which hinders high-speed processing. Further, a case where the decoder and encoder (for re-encoding) at the second pass are shared is also conceivable. However, in that case, there is a demerit that the function of set simultaneous operation is limited. For example, since the decoder and encoder for re-encoding might be used to acquire the degree of difficulty of encoding when direct recording at the first pass is performed, there is a problem in that re-encoding and dubbing from HDD to DVD cannot be performed simultaneously.

In consideration of the above actual circumstances, it is desirable to provide a moving picture signal encoding apparatus capable of reducing the scale of a circuit that acquires the information required to calculate the degree of difficulty of encoding and achieving high-speed encoding processing of a 2-pass variable bit rate system, a moving picture signal encoding method, and a computer-readable recording medium.

According to an embodiment of the invention, there is provided an apparatus for encoding input moving picture signals by using a 2-pass variable bit rate system. The apparatus includes: a stream analyzing section that analyzes the input moving picture signals to create information required to calculate the degree of difficulty of encoding per unit time; an encoding degree-of-difficulty calculating section that calculates the degree of difficulty of encoding per unit time on the basis of the information created by the stream analyzing section; a recording section that records the input moving picture signals and the information on the calculated degree of difficulty of encoding per unit time such that they correspond to each other; a decoding section that inputs the moving picture signals recorded on the recording section to decode the signals; a bit rate calculating section that calculates a bit rate to be allocated to encoding at a second pass on the basis of the information on the degree of difficulty of encoding per unit time recorded on the recording section; and an encoding section that performs encoding at a second pass on the signals decoded by the decoding section according to the bit rate calculated by the bit rate calculating section.

In the above embodiment of the present invention, the stream analyzing section may be adapted to analyze input moving picture signals to directly acquire the information required to calculate the degree of difficulty of encoding. This makes it unnecessary to provide an AV decoder and an AV encoder which encode the input moving picture signals after decoding thereof to acquire the information at the time of this encoding as the information for calculating the degree of difficulty of encoding. Thus, the stream analyzing section becomes smaller in circuit scale than the AV decoder and the AV encoder, and consequently low cost and high-speed processing can be achieved.

Further, in the moving picture signal encoding apparatus according to the embodiment of the present invention, the stream analyzing section may be a stream analyzing section that analyses at least header information of the input moving picture signals that are digital stream -signals encoded by MPEG-2 to create the information required to calculate the degree of difficulty of encoding per unit time. Further, the stream analyzing section may analyze data information of the input moving picture signals to create information required to calculate the degree of difficulty of encoding per unit time.

Since the information that becomes an index to calculate the degree of difficulty of encoding is included in the header information of the digital stream signals encoded by MPEG-2, the degree of difficulty of encoding can be calculated with high accuracy on the basis of this information.

Moreover, the moving picture signal encoding apparatus according to the embodiment of the present invention may further include: a simplified decoding/encoding section that simply decodes input moving picture signals and performs encoding at a first pass on the decoded signals; and a feature point analyzing section that analyzes the feature points of a picture on the basis of the information at the time of encoding by the simplified decoding/encoding section to create the information required to calculate the degree of difficulty of encoding per unit time. Here, the encoding degree-of-difficulty calculating section may be an encoding degree-of-difficulty calculating section that calculates the degree of difficulty of encoding per unit time on the basis of the information created by the stream analyzing section and the information created by the feature point analyzing section.

In the embodiment of the present invention, since the encoding degree-of-difficulty calculating section may calculate the degree of difficulty of encoding on the basis of the information created by the feature point analyzing section in addition to the information created by the stream analyzing section, the amount of information in calculating the degree of difficulty of encoding increases, and consequently an improvement in the precision of the information on the degree of difficulty of encoding can be expected.

Further, the simplified decoding/encoding section-may include a conversion circuit that thins out the number of pixels of a picture, and a decoding circuit that performs decoding on the picture the number of pixels of which is thinned out by the conversion circuit. A significant difference does not appear in the analysis results of feature points by the feature point analyzing section between an original picture and a picture the number of pixels of which is thinned out. Accordingly, a picture the number of pixels of which is thinned out becomes a target to be decoded. It is thus possible to achieve a reduction in the capacity of a memory or a reduction of a memory band for primarily storing the decoded data, a reduction in circuit scale resulting from a reduction in the processing amount of the decoding itself, and high-speed processing of a circuit resulting from a reduction in the circuit scale.

According to the present invention, it is possible to reduce the scale of a circuit that acquires the information required to calculate the degree of difficulty of encoding and achieve high-speed encoding processing of a 2-pass variable bit rate system.

Preferably, the apparatus and method records moving picture signals, such as MPEG-2 (Moving Picture Experts Group phase 2) stream signals, by a variable bit rate system. Also, preferably, the present invention relates to a computer program.

Various respective aspects and features of the invention are defined in the appended claims. Features from the dependent claims may be combined with features of the independent claims as appropriate and not merely as explicitly set out in the claims.

The invention will now be described by way of example with reference to the accompanying drawings, throughout which like parts are referred to by like references, and in which:
Fig. 1 is a block diagram showing the configuration of a moving picture signal encoding apparatus according to a first embodiment of the present invention;
Fig. 2 is a flowchart showing the flow of two-pass variable bit rate encoding operation of the moving picture signal encoding apparatus of Fig. 1;
Fig. 3 shows the configuration of a transport stream of MPEG-2;
Fig. 4 is a block diagram showing the configuration of a moving picture signal encoding apparatus according to a second embodiment of the present invention.
Fig. 5 is a flowchart showing the flow of 2-pass variable bit rate encoding operation of the cording apparatus for moving picture signals of Fig. 4;
Fig. 6 is a view showing an example of simplified decoding by a simplified AV decoder/encoder; and
Fig. 7 is a view showing another example of the simplified decoding by the simplified AV decoder/encoder.

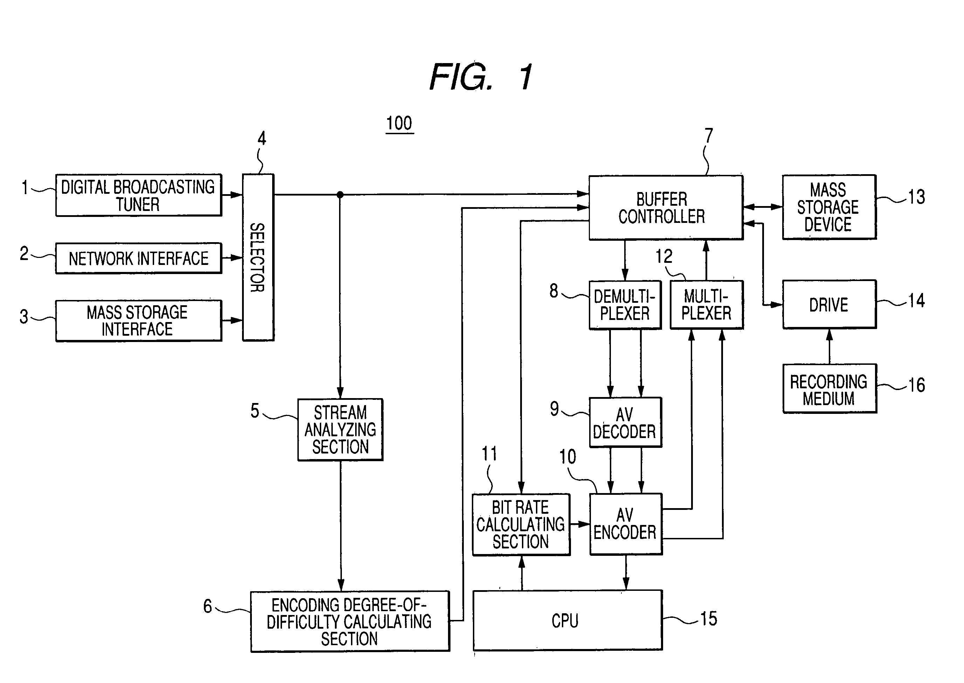

Fig. 1 is a block diagram showing the configuration of a moving picture signal encoding apparatus according to a first embodiment.

As shown in this figure, the moving picture signal encoding apparatus 100 according to the first embodiment includes a digital broadcasting tuner 1, a network interface 2, a mass storage interface 3, a selector 4, a stream analyzing section 5, an encoding degree-of-difficulty calculating section 6, a buffer controller 7, a demultiplexer 8, an AV (AudioNideo) decoder 9, an AV encoder 10, a bit rate calculating section 11, a multiplexer 12, a mass storage device 13, a drive 14, a CPU (Central Processing Unit) 15, etc.

The digital broadcasting tuner 1, the-network interface 2, and the mass storage interface 3 are means that are provided to input digital stream signals (moving picture signals) encoded by MPEG-2. The digital broadcasting tuner 1 includes, specifically, a BS digital broadcasting tuner, a CS digital broadcasting tuner, a ground wave digital broadcasting tuner, and the like which select and receive a digital broadcast. The network interface 2, which is an interface which establishes a connection with a network, is used for downloading of digital stream signals reserved in a state of being able to be delivered to a network. This network interface 2 includes, specifically, an Internet® interface, a wireless LAN (Local Area Network) interface, and the like. The mass storage interface 3, which is an interface that is provided to read in and input digital stream signals from a variety of storage devices that store data, includes, specifically, an IEEE (the Institute of Electrical and Electronic Engineers) 1394 interface, a USB (Universal Serial Bus) interface, and the like.

The selector 5 is a means that selects digital stream signals input from any one of the digital broadcasting tuner 1, the network interface 2, and the mass storage interface 3, on the basis of a control signal from the CPU 15.

The stream analyzing section 5 is a means that analyzes the digital stream signals input from the selector 4 at a first pass to create the information (encoding degree-of-difficulty information calculation variables) required to calculate the degree of difficulty of encoding per unit time, for instance, per frame.

The encoding degree-of-difficulty calculating section 6 is a means that is provided to calculate the degree of-difficulty of encoding per frame on the basis of the encoding degree-of-difficulty information calculation variables created by the stream analyzing section 5.

The buffer controller 7 is a means that controls reception/transmission of the digital stream signals or information on the degree of difficulty of encoding between the above sections.

The demultiplexer 8 is a means that separates the digital stream signals, which are input from the buffer controller 7 at a second pass, into a digital video stream and a digital audio stream to supply them to the AV decoder 9.

The AV decoder 9 is a means that decodes the digital video stream and digital audio stream input through the demultiplexer 8.

The AV encoder 10 is a means that performs encoding at the second pass on the video signals and audio signals, which are decoded by the AV decoder 9, according to a bit rate given by the bit rate calculating section 11. In addition, the variables to be given to the AV encoder 10 are not necessarily limited by the bit rate, but depend on the specification of the AV encoder.

The bit rate calculating section 11 is a means that calculates a bit rate to be allocated to encoding of a corresponding frame, on the basis of the information on the degree of difficulty of encoding created at the first pass, to supply the calculated bit rate to the AV encoder 10.

The multiplexer 12 is a means that multiplexes the digital video stream and digital audio stream, which are input by the AV encoder 10, to output them to the buffer controller 7.

The mass storage device 13 includes various storage devices that store data. For example, the mass storage device 13 is a device that performs recording and reading of the digital stream signals input at the first pass, the information on the degree of difficulty of encoding created in a system of the stream analyzing section 5 and the encoding degree-of-difficulty calculating section 6, and the like, or recording and reading of the digital stream signals encoded at a variable bit rate at the second pass.

The drive 14 is a device to/from which a recording medium 16, such as a DVD (Digital Versatile Disc), can be attached/detached, and that performs on the mounted recording medium 16, for example, recording and reading of the digital stream signals input at the first pass, the information on the degree of difficulty of encoding created in the system of the stream analyzing section 5 and the encoding degree-of-difficulty calculating section 6, and the like, or recording and reading of the digital stream signals encoded at a variable bit rate at the second pass.

The CPU 15 is a device that generally controls the respective sections of the moving picture signal encoding apparatus 100.

Next, the operation of the moving picture signal encoding apparatus 100 according to the first embodiment will be described.

In the moving picture signal encoding apparatus 100, at a first pass, input digital stream signals are recorded directly on the mass storage device 13, or recorded on the recording medium 16 by way of the drive 14, while the information required to calculate the degree of difficulty of encoding per frame from the digital stream signals is created as the information on the degree of difficulty of encoding per frame, and this information on the degree of difficulty of encoding is recorded directly on the mass storage device 13 or recorded on the recording medium 16 by way of the drive 14. At a second pass, the digital stream signals and the information on the degree of difficulty of encoding per frame are read out from the mass storage device 13 or from the recording medium 16 of the drive 14, and the digital stream signals are decoded, while a bit rate to be allocated to encoding of a frame is calculated on the basis of the information on the degree of difficulty of encoding, the decoded signals are encoded according to this bit rate, and the encoded signals are recorded on the mass storage device 13 or recorded on the recording medium 16 by way of the drive 14. Hereinafter, the operation will be described in more detail.

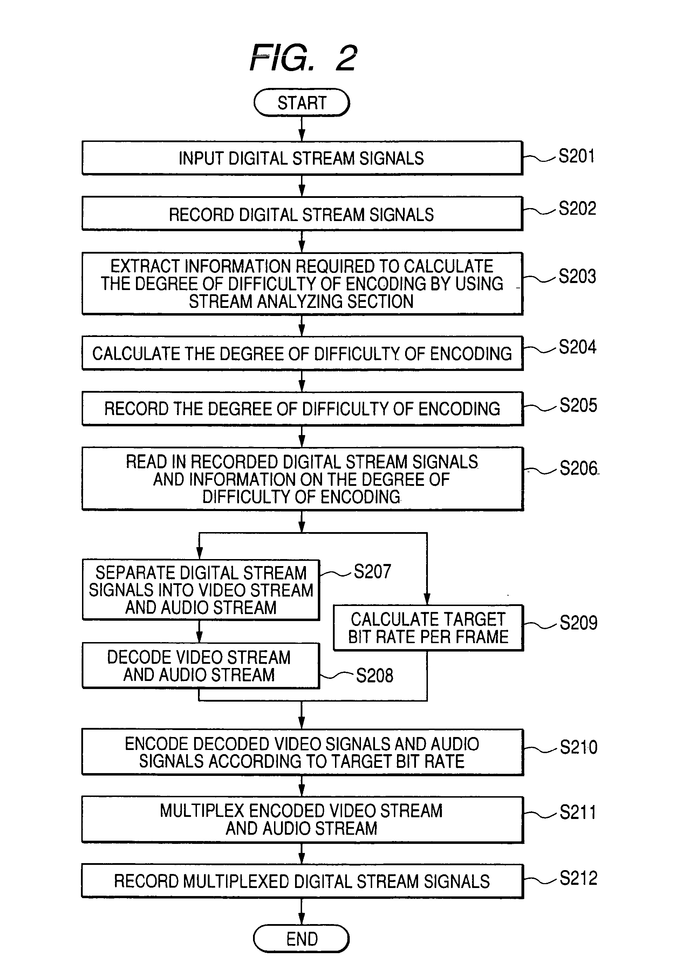

Fig. 2 is a flowchart showing the flow of 2-pass variable bit rate encoding operation of the moving picture signal encoding apparatus 100.

### (1.1) Operation at First Pass

The CPU 15 selects digital stream signals from any one system of the digital broadcasting tuner 1, the network interface 2, and the mass storage interface 3 by using the selector 4 (Step S201). The digital stream signals selected by the selector 4 are output to the buffer controller 7 and the stream analyzing section 5, respectively. The buffer controller 7 outputs the digital stream signals, which are the moving picture signals input from the selector 4, to the mass storage device 13 or the drive 14. Whether the input digital stream signals are to be input to either the mass storage device 13 or the drive 14 depends on the setting by a user or actual mounting. This causes the input digital stream signals to be recorded directly on the mass storage device 13 or the recording medium 16 mounted on the drive 14 (Step S202).

The stream analyzing section 5 creates information required to calculate the degree of difficulty of encoding per frame from header information or data information among the digital stream signals input from the selector 4 (Step S203), and outputs the information to the encoding degree-of-difficulty calculating section 6. The encoding degree-of-difficulty calculating section 6 calculates or discriminates the degree of difficulty of encoding per frame on the basis of the information input from the stream analyzing section 5 (S204), and outputs the information on the degree of difficulty of encoding to the buffer controller 7. The information on the degree of difficulty of encoding is a set of values or flags.

The buffer controller 7 outputs the information on the degree of difficulty of encoding input from the encoding degree-of-difficulty calculating section 6 to the mass storage device 13 or the drive 14. Whether the information on the degree of difficulty of encoding is to be output to either the mass storage device 13 or the drive 14 depends on the setting by a user or actual mounting. It is noted herein that there is no limitation that the information on the degree of difficulty of encoding and the stream should be recorded on the same medium. This causes the information on the degree of difficulty of encoding to be recorded on the mass storage device 13 or the recording medium 16 mounted on the drive 14 (Step S205). At this time, since the information on the degree of difficulty of encoding is information per unit time (frame) for the digital stream signals, the information on the degree of difficulty of encoding is recorded in such a format that the correspondence between the digital stream signals and the information on the degree of difficulty of encoding can be grasped.

### (1.2) Details of Stream Analyzing Section 5

The stream analyzing section 5 analyzes the header information or data information of the input digital stream signals to create the information (encoding degree-of-difficulty information calculation variables) required to calculate the degree of difficulty of encoding. As the encoding degree-of-difficulty information calculation variables, quantizing scale, the access unit (AU) size of video, a DC (Direct Current) coefficient of DCT (Discrete Cosign Transformation), and the like are conceivable. Besides, any information that becomes an index to calculate the degree of difficulty of encoding and that is obtained by analyzing the digital stream signals themselves may be used as the variables. Further, one kind of determined encoding degree-of-difficulty information calculation variable may be created as the information required to calculate the degree of difficulty of encoding or a plurality of encoding degree-of-difficulty information calculation variables may be created.

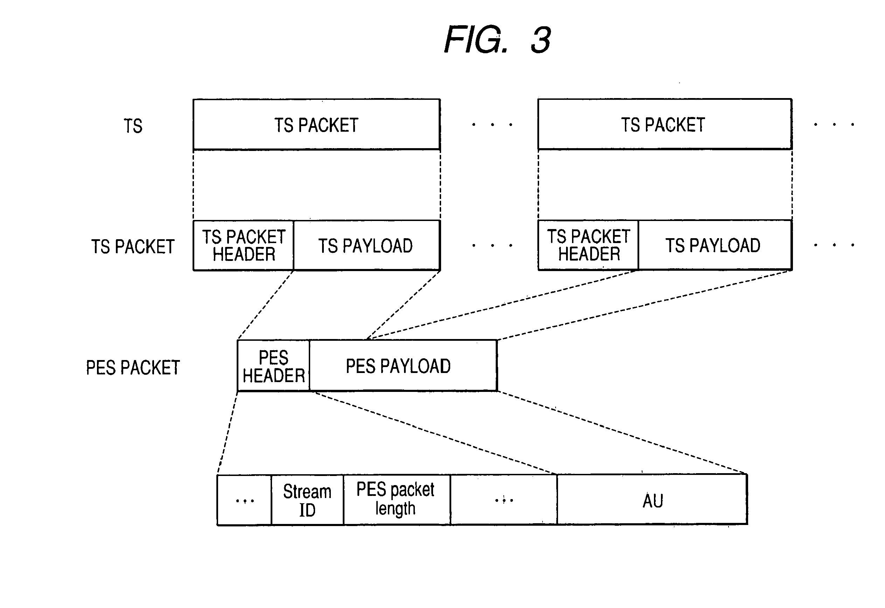

As an instance, creation of information on the access unit (AU) size of-video will be described below. Fig. 3 shows the configuration of a transport stream (TS) of MPEG-2. The transport stream includes TS packets having a fixed length (188 bytes) of 1 or greater. Each TS packet is composed of a TS packet header and a TS payload, and a PID number indicative of the type of the TS packet is defined in the TS packet header. A PES packet for receiving individual streams including a video stream and an audio stream, such as picture or voice, is split into several pieces for transmission by TS payloads of a plurality of TS packets having the same PID number. The PES packet is composed of a PES header and a PES payload. The PES payload is encoded data (access unit (AU)) of video or audio for one frame. At least an ID (Stream ID) indicative of whether the encoded data of the PES payload is audio or video and information (PES packet length) indicative of the size of the PES packet are included in the PES header.

Accordingly, the stream analyzing section 5 can analyze a PES header in an input digital stream signal to read in an ID (Stream ID) in the PES header, thereby detecting a PES packet having encoded data of video therein, and to read in PES packet size information (PES packet length) in the PES header of the PES packet, thereby detecting the access unit (AU) size for one frame.

The encoding degree-of-difficulty calculating section 6 calculates the degree of difficulty of encoding on the basis of the information acquired by the stream analyzing section 5 as such.

In addition, the information required to calculate the degree of difficulty of encoding, which is obtained from the MPEG-2 stream, can be obtained not only from the PES header but also from header information or data information of other layers.

### (1.3) Operation at Second Pass

Referring back to Fig. 2, the CPU 15 controls to output to the buffer controller 7 the digital stream signals and information on the degree of difficulty of encoding that are recorded on the recording medium 16 so as correspond to each other by the mass storage device 13 and drive 14 at the first pass (Step S206). The buffer controller 7 outputs the input digital stream signals to the demultiplexer 8, while the buffer controller outputs the input information on the degree of difficulty of encoding to the bit rate calculating section 11. The demultiplexer 8 separates the digital stream signals input from the buffer controller 7 into a digital video stream and a digital audio signal (Step S207), and outputs these streams to the AV decoder 9. The AV decoder 9 decodes the digital video stream and digital audio stream input from the demultiplexer 8 (Step S208) and outputs the decoded signals to the AV encoder 10.

Meanwhile, the bit rate calculating section 11 calculates a target bit rate from a target average bit rate set in advance from the CPU 15 and the information on the degree of difficulty of encoding input from the buffer controller 7 (Step S209). More specifically, when the number of frames of the whole transport stream is defined as N, the sum of values of the information on the degree of difficulty of encoding per frame is obtained, and the average value of the information on the degree of difficulty of encoding is obtained by dividing the sum by N. The target average bit rate set from the CPU 15 is correlated to this average value, and a target bit rate per frame is calculated from a difference between the information on the degree of difficulty of encoding per frame and the average value and the magnitude relation therebetween. That is, a high target bit rate corresponding to the above difference is allocated to a frame in which the information on the degree of difficulty of encoding is higher than average value encoding, and a low target bit rate corresponding to the above difference is allocated to a frame in which the information on the degree of difficulty of encoding is lower than average value encoding. Then, the information on the calculated target bit rate is output to the AV encoder 10.

The AV encoder 10 encodes the video signals and audio signals input from the AV decoder 9 using the information of the target bit rate input from the bit rate calculating section 11 (Step S210). Here, the value of the bit rate resulting from the encoding in the AV encoder 10 is output to the CPU 15, and the difference between this value and the target bit rate is calculated by the CPU 15, and fed back to the next bit rate calculation.

The digital video stream and digital audio stream encoded by the AV encoder 10 are output to the multiplexer 12. The multiplexer 12 multiplexes the input digital video stream and digital audio stream (Step S211), and outputs the multiplexed signals to the buffer controller 7 as digital stream signals.

The buffer controller 7 outputs the digital stream signals input from the multiplexer 12 to the mass storage device 13 or the drive 4. Whether the digital stream signals encoded at a variable bit rate is to be output to either the mass storage device 13 or the drive 14 depends on the setting by a user or actual mounting. This causes the digital stream signals encoded at a variable bit rate to be recorded on the mass storage device 13 or the recording medium 16 mounted on the drive 14 (Step S212).

As described above, according to the moving picture signal encoding apparatus 100 of this embodiment, the stream analyzing section 5 is adapted to analyze the input digital stream signals to directly acquire the information required to calculate the degree of difficulty of encoding. This makes it unnecessary to provide an AV decoder and an AV encoder which encode the input digital stream signals after decoding thereof to extract the information at the time of this encoding as the information for calculating the degree of difficulty of encoding. Thus, the stream analyzing section 5 becomes smaller in circuit scale than the AV decoder and the AV encoder, and consequently low cost and high-speed processing can be achieved.

Further, the input of the digital stream signals at the first pass can also be an input from the network interface 2 or the mass storage interface 3 other than the digital broadcasting tuner 1. In the case of the input from the network interface 2 or the mass storage interface 3, the input can be performed at higher speed than the input of the digital broadcasting tuner 1. With respect to such high-speed input of digital stream signals, there is a probability in related art that the performance of a decoding section or an encoding section that acquires the information on the degree of difficulty of encoding becomes a bottleneck. However, in this embodiment, the stream analyzing section 5 can be constituted with pure hardware. Thus, high-speed processing can be expected. Further, even if the present system is assembled with hardware, high-speed processing can be expected.

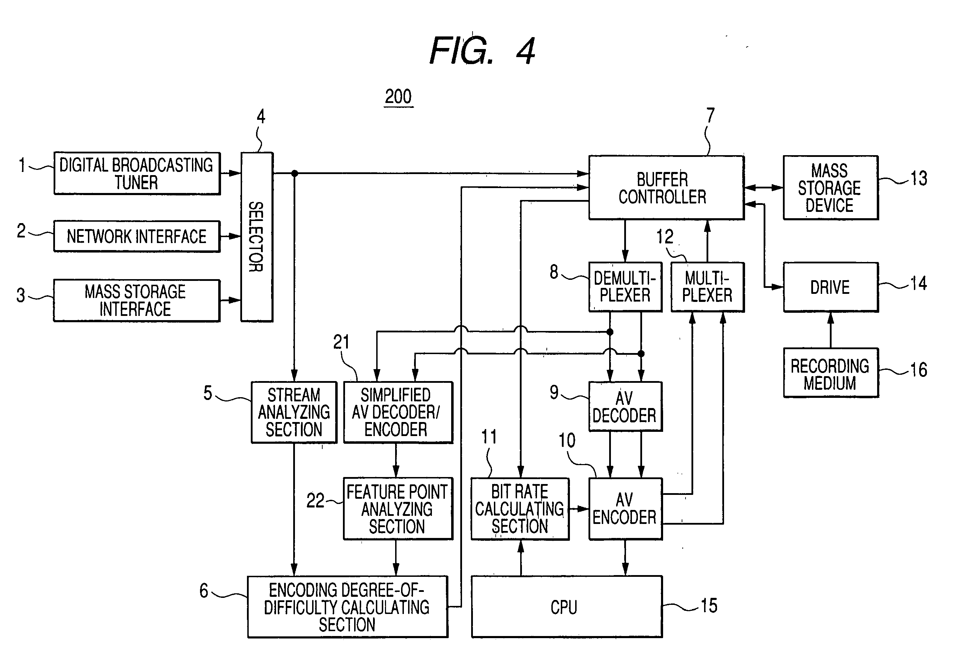

Fig. 4 is a block diagram showing the configuration of a moving picture signal encoding apparatus that is a second embodiment of the present invention.

As shown in this figure, the moving picture signal encoding apparatus 200 includes the digital broadcasting tuner 1, the network interface 2, the mass storage interface 3, the selector 4, the stream analyzing section 5, the encoding degree-of-difficulty calculating section 6, the buffer controller 7, the demultiplexer 8, the AV (Audio/Video) decoder 9, the AV encoder 10, a simplified AV decoder/encoder 21, a feature point analyzing section 22, the bit rate calculating section 11, the multiplexer 12, the mass storage device 13, the drive 14, the CPU (Central Processing Unit) 15, etc.

That is, the moving picture signal encoding apparatus 200 according to the present embodiment is obtained by adding the simplified AV decoder/encoder 21 and the feature point analyzing section 22 to the configuration of the moving picture signal encoding apparatus 100 according to the first embodiment.

In the above configuration, the demultiplexer 8 separates the digital stream signals input from the buffer controller 7 at the first pass into a digital video stream and a digital audio stream to supply these digital video and audio streams to the simplified AV decoder/encoder 21, and the digital streams signals from the buffer controller 7 at the second pass into a digital video stream and a digital audio stream to supply these digital video and audio streams to the AV decoder 9.

The simplified AV decoder/encoder 21 is a means that simply decodes the digital video stream signals and digital audio stream signals input from the demultiplexer 8, encodes the decoded signals, for example, at a fixed bit rate, and outputs to the feature point analyzing section 22 the information that becomes the index of complexity of a picture, such as the amount of bits created at the time of this encoding, quantizing scale, movement estimation (ME) errors, scene change information, and color information.

The feature point analyzing section 22 is a means that analyzes the feature points of a picture on the basis of the information input from the simplified AV decoder/encoder 21, and outputs to the encoding degree-of-difficulty calculating section 6 the encoding degree-of-difficulty information calculation variables that are analysis results. The feature points of a picture will be descried below in detail.

The encoding degree-of-difficulty calculating section 6 is a means that calculates the degree of difficulty of encoding per unit time, for example, per frame on the basis of the encoding degree-of-difficulty information calculation variables created by the stream analyzing section 5, and the encoding degree-of-difficulty information calculation variables input from the feature point analyzing section 22, and outputs the information on the degree of difficulty of encoding to the buffer controller 7.

Next, the operation of the moving picture signal encoding apparatus 200 according to the second embodiment will be described.

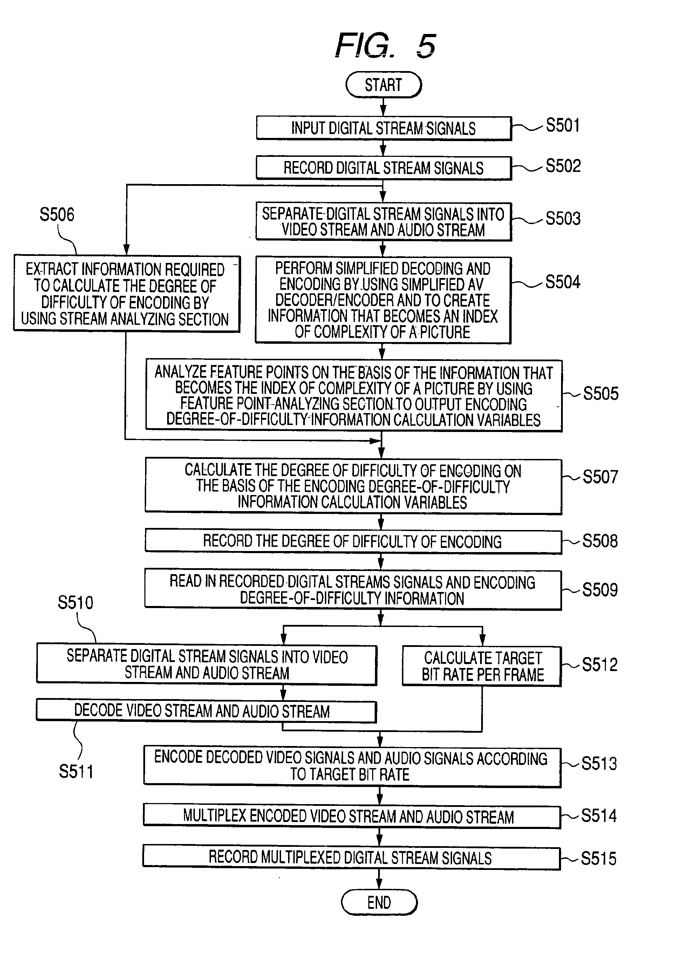

Fig. 5 is a flowchart showing the flow of 2-pass variable bit rate encoding operation of the moving picture signal encoding apparatus 200.

### (2.1) Operation at First Pass

The CPU 15 selects digital stream signals from any one system of the digital broadcasting tuner 1, the network interface 2, and the mass storage interface 3 by using the selector 4 (Step S501). The digital stream signals selected by the selector 4 are output to the buffer controller 7 and the stream analyzing section 5, respectively.

The buffer controller 7 outputs the digital stream signals input from the selector 4 to the mass storage device 13 or the drive 14, and outputs them to the demultiplexer 8. Whether the input digital stream signals are to be output to either the mass storage device 13 or the drive 14 depends on the setting by a user or actual mounting. This causes the output digital stream signals to be recorded directly on the mass storage device 13 or the recording medium 16 mounted on the drive 14 (Step S502).

The demultiplexer 8 separates the digital stream signals input from the buffer controller 7 into a digital video stream and a digital audio stream to output the digital video and audio steams to the simplified AV decoder/encoder 21 (Step S503). After the simplified AV decoder/encoder 21 simply decodes the digital video stream and digital audio stream, respectively, which are input from the demultiplexer 8, the simplified AV decoder/encoder encodes the decoded signals, for example, at a fixed bit rate, and outputs to the feature point analyzing section 22 the information that becomes the index of complexity of a picture, such as the amount of bits created at the time of this encoding, quantizing scale, movement estimation (ME) errors, scene change information, and color information (Step S504).

The feature point analyzing section 22 analyzes the feature points of a picture on the basis of the information input from the simplified AV decoder/encoder 21, and outputs to the encoding degree-of-difficulty calculating section 6 the encoding degree-of-difficulty information calculation variables that are analysis results (Step S505).

Meanwhile, the stream analyzing section 5 creates information required to calculate the degree of difficulty of encoding per frame from header information or data information among the digital stream signals input from the selector 4 (Step S506), and outputs the information to the encoding degree-of-difficulty calculating section 6.

The encoding degree-of-difficulty calculating section 6 calculates the degree of difficulty of encoding on the basis of the encoding degree-of-difficulty information calculation variables input from the feature point analyzing section 22 and the encoding degree-of-difficulty information calculation variables input from the stream analyzing section 5 (Step S507), and outputs the calculated encoding degree-of difficulty information to the buffer controller 7.

Thereafter, the buffer controller 7 outputs the information on the degree of difficulty of encoding input from the encoding degree-of-difficulty calculating section 6 to the mass storage device 13 or the drive 14. Whether the information on the degree of difficulty of encoding is to be output to either the mass storage device 13 or the drive 14 depends on the setting by a user or actual mounting. This causes the information on the degree of difficulty of encoding to be recorded on the mass storage device 13 or the recording medium 16 mounted on the drive 14 (Step S508). At this time, since the information on the degree of difficulty of encoding is information per frame, the information on the degree of difficulty of encoding is recorded in such a format that the correspondence between the digital stream signals recorded in advance on the mass storage device 13 or on the recording medium 16 of the drive 14 and the information on the degree of difficulty of encoding can be grasped.

### (2.2) Details of Simplified Decoding by Simplified AV Decoder/Encoder 21

The simplified decoding by the simplified AV decoder/encoder 21 is a method of performing decoding on a picture having the number of pixels in the horizontal direction or vertical direction of a frame thinned out to half by, for example, half conversion, or a method of performing decoding on only differences between pixels in the horizontal or vertical direction. This simplified decoding provides advantages, such as a reduction in the capacity of a memory or a reduction of a memory band for primarily storing the decoded data, a reduction in circuit scale resulting from a reduction in the processing amount of the decoding itself, and high-speed processing of a circuit resulting from a reduction in the circuit scale.

Further, in order to further reduce the number of pixels of a frame to enhance the above advantages, down-conversion may be performed in addition to the half conversion. The down-conversion is processing of thinning out the number of pixels of the frame in the horizontal and vertical direction, respectively, and consequently converting the above number of pixels to the number of pixels (480 x 640) of an SD (Standard Television) picture.

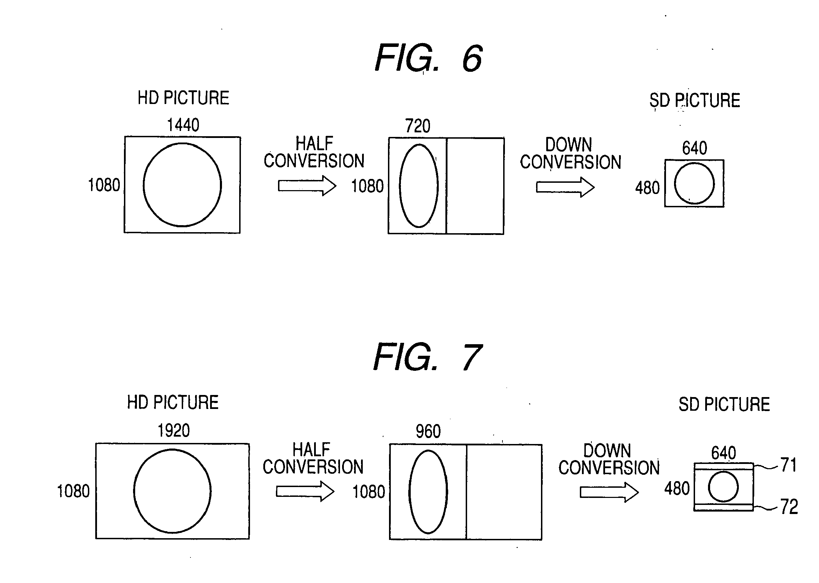

Fig. 6 is a view showing a conversion example of the number of pixels by the above half conversion and down-conversion. This example shows a case which an HD (High Definition broadcasting) picture is used as an input picture, and the number of pixels is 1080 X 1440. A picture of 1080 X 720 is created by thinning out the number of pixels of the HD picture in the horizontal direction to 1/2 by half conversion, and further an SD picture of 480 X 640 is created by down-conversion. That is, the number of pixels of 1080 X 720 after the half conversion is thinned out to 1/1.125 in the horizontal direction and thinned out to 1/2.25 in the vertical direction by the down-conversion so as to become 480 X 640 (SD picture).

Fig. 7 is a view showing another conversion example of the number of pixels by the above half conversion and down-conversion. The number of pixels of an input HD picture is 1080 X 1920. A picture of 1080 X 960 is created by thinning out the number of pixels of this HD picture in the horizontal direction to 1/2 by the half conversion. In this case, in order to obtain 640 as the final number of pixels in the horizontal direction, the number of pixels of 1080 X 960 after the half conversion is thinned out to 1/1.5 in the horizontal direction and thinned out to 1/3.375 in the vertical direction by the down-conversion, and thereafter dumpy pixels (80 X 640) 71, 72 are added to the top and bottom of the picture. Thereby, an SD picture of 480 X 640 is created.

As shown in Figs. 6 and 7, when an original HD picture, a picture after the half conversion, and an SD picture after the down-conversion are compared with one another, it can be understood that there is no great difference in feature points of the respective images, that is, the half conversion and down-conversion can reduce the number of pixels, leaving the feature points of each picture.

Meanwhile, whether only the half conversion or both the half conversion and the down-conversion is to be performed by the simplified AV decoder/encoder 21 depends on the point that an input picture determined by the specification of a system is an HD picture or an SD picture, and the performance of the simplified AV decoder/encoder 21, particularly the performance of a circuit that analyzes a picture decoded inside an encoder. For example, in a case where an SD picture is chosen as the input picture, only the half conversion is performed without depending on the performance of a picture analyzing circuit within the simplified AV decoder/encoder 21. Further, if the input picture is an HD picture and the performance of a picture analyzing circuit within the simplified AV decoder/encoder 21 supports analysis of the HD picture, only the half conversion is performed. Further, if the input picture is an HD picture and the performance of a picture analyzing circuit within the simplified AV decoder/encoder 21 supports only analysis of the SD picture, both the half conversion and the down-conversion are performed.

### (2.3) Details of Feature point Analyzing Section 22

The feature point analyzing section 22 analyzes the feature points of a picture on the basis of the information input from the simplified AV decoder/encoder 21, and outputs to the encoding degree-of-difficulty calculating section 6 the encoding degree-of-difficulty information calculation variables that are analysis results. The feature points are characteristic parts (tickers, captions, etc.) or color (skin color, etc.) of a picture, movements (scene change, fade, etc.), and the like. As the encoding degree-of-difficulty information calculation variables obtained from analysis results of such feature points, there are the amount of bits generated, quantizing scale, movement estimation (ME) errors, scene change information, and color information. It is noted herein that the variables that can be acquired according to the specification of the simplified AV decoder/encoder 21 are different.

### (2.4) Details of Encoding Degree-of-Difficulty Calculating Section 6

As the information on the degree of difficulty of encoding calculated from the encoding degree-of-difficulty information calculation variables by the encoding degree-of-difficulty calculating section 6, there are flag information, for example, Flush detection, cross-fade detection, scene change detection (1), scene change detection (2), detection before and after cross-fade, chromaticity (skin color) detection, and the like, in addition to the values of the access unit (AU) size.

The flag of the Flush change detection becomes effective in a case where it is determined that a scene change-has occurred over a-prescribed number of times within 1 GOP (Group Of Picture). The flag of the cross-fade detection becomes effective in a case where the comparative value of the number of times of occurrence of movement estimation (ME) errors per a predetermined number of past continuous GOPs is over a prescribed value. The cross-fade is a function that simultaneously performs fade-in and fade-out to switch different pictures to each other. The flag of the scene change detection (1) becomes effective if scene change information is in an ON state. The flag of the scene change detection (2) becomes effective in a case where the number of times of occurrence of ME errors of three past continuous GOPs is a prescribed multiple of the number of occurrence of ME errors of the present GOP or a Q scale value is over a prescribed value. The flag of the detection before and after cross-fade becomes effective in a GOP after the cross-fade detection or after the scene change detection (2). The flag of the chromaticity (skin color) detection becomes effective if the color information is in an ON state ove a prescribed value.

The information on the degree of difficulty of encoding can be used not only for calculation of a bit rate at the time of re-encoding at the second pass but also for editing as the feature points of a picture. For example, an application such as automatically performing chapter appending in a scene change detecting portion can be made.

### (2.5) Operation at Second Pass

The operation at the second pass is similar to that of the first embodiment. Specifically, referring back to Fig. 5, the CPU 15 controls to output the digital stream signals and information on the degree of difficulty of encoding recorded on the mass storage device 13 or on the recording medium 16 of the drive 14 at the first pass to the buffer controller 7 (Step S509). The buffer controller 7 outputs the input digital stream signals to the demultiplexer 8, while it outputs the input information on the degree of difficulty of encoding to the bit rate calculating section 11. The demultiplexer 8 separates the digital stream signals input from the buffer controller 7 into a digital video stream and a digital audio signal (Step S310), and outputs these streams to the AV decoder 9. The AV decoder 9 decodes the digital video stream and digital audio stream input from the demultiplexer 8 (Step S511) and outputs the decoded signals to the AV encoder 10.

Meanwhile, the bit rate calculating section 11 calculates a target bit rate from a target average bit rate set in advance from the CPU 15 and the information on the degree of difficulty of encoding input from the buffer controller 7 (Step S512). More specifically, when the number of frames of the whole transport stream is defined as N, the sum of values of the information on the degree of difficulty of encoding per frame is obtained, and the average value of the information on the degree of difficulty of encoding is obtained by dividing the sum by N. The target average bit rate set from the CPU 15 is correlated to this average value, and a target bit rate per frame is calculated from a difference between the information on the degree of difficulty of encoding per frame and the average value and the magnitude relation therebetween. That is, a high target bit rate corresponding to the above difference is allocated to a frame in which the information on the degree of difficulty of encoding is higher than average value encoding, and a low target bit rate corresponding to the above difference is allocated to a frame in which the information on the degree of difficulty of encoding is lower than average value encoding. Then, the information of the calculated target bit rate is output to the AV encoder 10.

The AV encoder 10 encodes the video signals and audio signals input from the AV decoder 9 using the information of the target bit rate input from the bit rate calculating section 11 (Step S513). Here, the value of the bit rate resulting from the encoding in the AV encoder 10 is output to the CPU 15, and the difference between this value and the target bit rate is calculated by the CPU 15, and fed back to the next bit rate calculation.

The digital video stream and digital audio stream encoded by the AV encoder 10 are output to the multiplexer 12. The multiplexer 12 multiplexes the input digital video stream and digital audio stream (Step S514), and outputs the multiplexed signals to the buffer controller 7 as digital stream signals.

The buffer controller 7 outputs the digital stream signals input from the multiplexer 12 to the mass storage device 13 or the drive 4. Whether the digital stream signals encoded at a variable bit rate are to be output to either the mass storage device 13 or the drive 14 depends on the setting by a user or actual mounting. This causes the digital stream signals encoded at a variable bit rate to be recorded on the mass storage device 13 or the recording medium 16 mounted on the drive 14 (Step S515).

As described above, according to the moving picture signal encoding apparatus 200 of this embodiment, the creation of encoding degree-of-difficulty information calculation variables by the analysis of the digital stream signals by the stream analyzing section 5 and the creation of the encoding degree-of-difficulty information calculation variables by the simplified AV decoder/encoder 21 and the feature point analyzing section 22 are carried out simultaneously, and the degree of difficulty of encoding is calculated on the basis of the encoding degree-of-difficuity information calculation variables created in each system by the encoding degree-of-difficulty calculating section 6. This makes it possible to improve the precision of the information on the degree of difficulty of encoding or to increase the amount of the information by an increase in the encoding degree-of-difficulty information calculation variables.

Further, the simplified AV decoder/encoder 21 performs decoding on a picture the number of pixels of which is thinned out by the half conversion, or the half conversion and down-conversion. Thereby, the capacity of a memory or a reduction of a memory band for storing the decoded signal can be reduced, and a reduction in the circuit scale and high-speed processing can be realized. Further, since the feature point analyzing section 22 is constituted with a logic which performs analysis of only specific feature points, the circuit scale can be reduced, and consequently low cost and high-speed processing can be achieved.

### (Computer-Readable Recording Medium on which Information on the Degree of Difficulty of Encoding is Recorded)

The information on the degree of difficulty of encoding created at the first pass of the moving picture signal encoding apparatus 100 according to the first embodiment or the moving picture signal encoding apparatus 200 according to the second embodiment can be utilized for calculation of a bit rate when digital stream signals input from the outside are encoded at 2-pass VBR by other encoding apparatuses having no function to create the information on the degree of difficulty of encoding. Thus, the information on the degree of difficulty of encoding created by the moving picture signal encoding apparatus 100 according to the first embodiment or the moving picture signal encoding apparatus 200 according to the second embodiment may be recorded on a computer-readable recording medium so that the information on the degree of difficulty of encoding may be transmitted to other encoding apparatuses by distribution of the recording medium.

Although the embodiments according to the present invention have been described hitherto, it is natural that the present invention is not limited to the above-described embodiments, and various modifications can be made thereto without departing from the sprit and scope of the present invention.

For example, although the above embodiments have been described in conjunction with the case where an MPEG-2 stream is handled as the stream signals, the present invention can also be applied to a system which handles an H. 264/AVC stream.

It should be understood by those skilled in the art that various modifications, combinations, sub-combinations, and alternations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An apparatus for encoding input moving picture signals by using a 2-pass variable bit rate system, the apparatus comprising:
a stream analyzing section that analyzes the input moving picture signals to create information required to calculate the degree of difficulty of encoding per unit time;
an encoding degree-of-difficulty calculating section that calculates the degree of difficulty of encoding per unit time on the basis of the information created by the stream analyzing section;
a recording section that records the input moving picture signals and the information on the calculated degree of difficulty of encoding per unit time such that they correspond to each other;
a decoding section that inputs the moving picture signals recorded on the recording section to decode the signals;
a bit rate calculating section that calculates a bit rate to be allocated to encoding at a second pass on the basis of the information on the degree of difficulty of encoding per unit time recorded on the recording section; and
an encoding section that performs encoding at a second pass on the signals decoded by the decoding section according to the bit rate calculated by the bit rate calculating section.

2. The moving picture signal encoding apparatus according to Claim 1,
wherein the input moving picture signals are digital stream signals encoded by MPEG-2,
the stream analyzing section analyses at least header information of the input moving picture signals to create the information required to calculate the degree of difficulty of encoding per unit time.

3. The moving picture signal encoding apparatus according to Claim 1, further comprising:
a simplified decoding/encoding section that simply decodes input moving picture signals and performs encoding at a first pass on the decoded signals; and
a feature point analyzing section that analyzes the feature points of a picture on the basis of the information at the time of encoding by the simplified decoding/encoding section to create the information required to calculate the degree of difficulty of encoding per unit time,
wherein the encoding degree-of-difficulty calculating section calculates the degree of difficulty of encoding per unit time on the basis of the information created by the stream analyzing section and the information created by the feature point analyzing section.

4. The moving picture signal encoding apparatus according to Claim 3,
wherein the simplified decoding/encoding section includes a conversion circuit that thins out the number of pixels of a picture, and a decoding circuit that performs decoding on the picture the number of pixels of which is thinned out by the conversion circuit.

5. A method for encoding input moving picture signals by using a 2-pass variable bit rate system, the method comprising the steps of:
at a first pass, analyzing the input moving picture signals to calculate the degree of difficulty of encoding per unit time, and recording on a recording section the input moving picture signals and the information on the calculated degree of difficulty of encoding per unit time such that they correspond to each other, and
at a second pass, decoding the moving picture signals recorded on the recording section, calculating a bit rate to be allocated to encoding on the basis of the information on the degree of difficulty of encoding per unit time recorded on the recording section, and encoding the decoded signals according to the calculated bit rate.

6. A computer-readable recording medium on which information on the degree of difficulty of encoding per unit time of moving picture signals, which is to be used for calculation of a bit rate to be allocated to encoding by a 2-pass variable bit rate system of moving picture signals, is recorded.
